# EUROPEAN PATENT APPLICATION

(11) **EP 4 810 136 A1**
(43) Date of publication of application: **23.09.2026**
(21) Application number: 25176636.6
(22) Date of filing: 15.05.2025
(51) Int. Cl.: A63F 13/24

(54) **CROSS KEY MODULE AND GAME CONTROLLER**

(30) Priority: 17.03.2025 CN 202520468134 U
(71) Applicant: Shenzhen Qixiong Technology Co., Ltd, 518000 Shenzhen City Guangdong (CN)
(72) Inventor: HU, Xiaochen, Shenzhen (CN)
(74) Representative: Monteiro Alves, Inês

(57) **Abstract**

Disclosed are a cross key module (100) and a game controller. The cross key module (100) includes a key cap (1), a face shell (12), a circuit board (4), and a joystick structure (2). The face shell (12) is provided with a through hole (121). The key cap (1) and the circuit board (4) are respectively located on two sides of the face shell (12), and the circuit board (4) is provided with contacts. The joystick structure (2) is rotatably connected to the face shell (12), and the joystick structure (2) is provided with a connection rod (21) and a trigger portion (22) connected to the connection rod (21). One end of the connection rod (21) passes through the through hole (121) and is connected to the key cap (1). The trigger portion (22) is configured to trigger the contacts.

## Description

### TECHNICAL FIELD

The present application relates to the technical field of controller buttons, and in particular to a cross key module and a game controller.

### BACKGROUND

Directional buttons are a standard feature on modern game controllers, primarily used to navigate game characters in four directions: up, down, left, and right. Currently, the commonly used button form for direction input on game controllers is a cross key.

The cross key mainly relies on pressing the key cap to make the conductive body below move vertically downward to conduct the circuit, thereby controlling the movement of the game character. However, this triggering method, in which the key cap drives the conductive body to move vertically downward, results in difficulties in operation and poor feeling during input.

### SUMMARY

The present application is to provide a cross key module and a game controller, aiming to enhance the triggering flexibility of the cross key module and effectively improve the user's feeling.

In order to achieve the above object, the present application provides a cross key module, the cross key module including: a key cap; a face shell provided with a through hole; a circuit board provided with contacts; and a joystick structure rotatably connected to the face shell. The key cap and the circuit board are respectively located on two sides of the face shell; the joystick structure is provided with a connection rod and a trigger portion connected to the connection rod, one end of the connection rod passes through the through hole and is connected to the key cap, and the trigger portion is configured to trigger the contacts; and when the key cap is pressed, the key cap drives the trigger portion to rotate relative to the face shell through the connection rod, and the trigger portion triggers the contacts.

In an embodiment, the joystick structure includes a joystick body and a rotation block, the rotation block is rotatably connected to the face shell, the joystick body is provided with the connection rod and the trigger portion, and the connection rod is rotatably connected to the rotation block; and a rotation axis of the rotation block relative to the face shell is arranged along a first direction, a rotation axis of the connection rod relative to the rotation block is arranged along a second direction, and the first direction and the second direction are perpendicular to each other.

In an embodiment, the face shell is provided with an installation column, the through hole passes through the installation column, the installation column is further provided with a first axis hole communicating with the through hole, the rotation block is provided with a first rotation axis, the first rotation axis extends along the first direction, and the first rotation axis is rotatably inserted into the first axis hole.

In an embodiment, the rotation block is further provided with an installation chamber, a chamber wall of the installation chamber is provided with a second rotation axis, the second rotation axis extends along the second direction, the connection rod is provided with a second axis hole, the connection rod is inserted into the installation chamber, and the second rotation axis is rotatably inserted into the second axis hole.

In an embodiment, the connection rod is further provided with a guide bevel, and the guide bevel is configured to guide the second rotation axis to enter the second axis hole; and/or the second axis hole is provided at one end of the connection rod close to the trigger portion, the trigger portion is provided with an avoidance groove corresponding to the rotation block, and the rotation block is located in the avoidance groove.

In an embodiment, a spherical protrusion is formed on one side of the trigger portion away from the circuit board, the spherical protrusion is connected to the connection rod, the face shell is provided with a spherical groove, the through hole passes through a bottom of the spherical groove, and the spherical protrusion is limited within the spherical groove.

In an embodiment, the face shell is further provided with a limit member close to the spherical groove, the limit member is provided with a limit groove, the trigger portion is provided with a limit column, and the limit column is movably limited within the limit groove.

In an embodiment, the key cap is provided with an installation rod, the installation rod is provided with an installation hole which is pluggable and matched with the connection rod, so that the key cap is detachably connected to the joystick structure.

In an embodiment, the circuit board is provided with a plurality of tactile switches, each tactile switch is configured as one of the contacts, the trigger portion is provided with a plurality of silicone parts, the silicone parts correspond one-to-one with the contacts, and the silicone parts are configured to press and trigger the tactile switches; or the circuit board is provided with a plurality of conductive silicone buttons, and each conductive silicone button is configured as one of the contacts.

In an embodiment, the cross key module further including a reset elastic part, wherein one end of the reset elastic part is connected to the trigger portion, another end of the reset elastic part is connected to the circuit board, the reset elastic part is coaxial with the connection rod, and the reset elastic part is configured to drive the joystick structure to reset.

In an embodiment, the present application provides a game controller, including: the cross key module as described above.

The cross key module in the technical solution of the present application includes a key cap, a face shell, a circuit board, and a joystick structure. The face shell serves as a support member to provide mounting positions for the joystick structure and the key cap. The key cap is provided on the outer side of the face shell for user operation, the circuit board is provided on the inner side of the face shell, and the joystick structure is located between the face shell and the circuit board. The joystick structure is connected to the key cap via a connection rod. The joystick structure triggers the contacts on the circuit board via a trigger portion. During use, the relative positions of the circuit board and the face shell remain stationary. The user drives the connection rod and the trigger portion to rotate relative to the face shell by pressing the key cap, so that the trigger portion triggers the contacts on the circuit board, thereby enabling the circuit board to generate corresponding electrical signals to control the movement of the game character. In the present application, the joystick structure is rotatably connected to the face shell, which can enhance the triggering flexibility of the cross key module and effectively improve the user's feel.

### BRIEF DESCRIPTION OF THE DRAWINGS

FIG. 1 is an exploded schematic structural view of a cross key module according to an embodiment of the present application.
FIG. 2 is a schematic structural view of a connection rod and a trigger portion according to an embodiment of the present application.
FIG. 3 is another schematic structural view of a connection rod and a trigger portion according to an embodiment of the present application.
FIG. 4 is a schematic structural view of a rotation block according to an embodiment of the present application.
FIG. 5 is a schematic structural view of a joystick structure according to an embodiment of the present application.
FIG. 6 is a schematic structural view of a rotation block and a face shell according to an embodiment of the present application.
FIG. 7 is a cross-sectional schematic structural view of a cross key module according to an embodiment of the present application.
FIG. 8 is an exploded schematic structural view of a cross key module according to another embodiment of the present application.
FIG. 9 is a schematic structural view of a joystick structure according to another embodiment of the present application.
FIG. 10 is a schematic structural view of a face shell according to another embodiment of the present application.
FIG. 11 is a schematic structural view of a face shell and a joystick structure according to another embodiment of the present application.
FIG. 12 is a cross-sectional schematic structural view of a cross key module according to another embodiment of the present application.

### Description of reference signs:

100.cross key module; 1.key cap; 11.installation rod; 111.installation hole; 12.face shell; 121.through hole; 122.installation column; 1221.convex portion; 1222.first axis hole; 123.spherical groove; 124.limit member; 1241.limit groove;
2.joystick structure; 21.connection rod; 211.second axis hole; 212.guide bevel; 213.first section; 214.second section; 22.trigger portion; 221.avoidance groove; 2221.avoidance hole; 223.spherical protrusion; 224.limit column; 225.limit hole; 226.silicone part; 227.positioning column; 23.rotation block; 231.the first rotation axis; 232. installation chamber; 233.the second rotation axis;
3.reset elastic part;
4.circuit board; 41.tactile switch;

The realization of the objective, functional characteristics, and advantages of the present application are further described with reference to the accompanying drawings.

### DETAILED DESCRIPTION OF THE EMBODIMENTS

The following will be combined with the drawings in the embodiments of the present application to clearly and completely describe the technical solutions in the embodiments of the present application. Obviously, the described embodiments are only part of the embodiments of the present application, not all of the embodiments. Based on the embodiments in the present application, all other embodiments obtained by ordinary technicians in this field without creative work are within the scope of protection of the present application.

It should be noted that if there are directional indications (such as up, down, left, right, front, back...) in the embodiments of the present application, the directional indication is only used to explain the relative position relationship, movement, etc. between the components in a certain posture. If the specific posture changes, the directional indication will also change accordingly.

In addition, if there are descriptions of "first", "second", etc. in the embodiments of the present application, the descriptions of "first", "second", etc. are only used for descriptive purposes, and cannot be understood as indicating or implying their relative importance or implicitly indicating the number of technical features indicated. Therefore, the features defined as "first" and "second" can explicitly or implicitly include at least one of the features. In addition, if "and/or" or "and/or" appears in the full text, its meaning includes three parallel solutions. Taking "A and/or B" as an example, it includes solution A, solution B, or solutions that satisfy both A and B. In addition, the technical solutions between the various embodiments can be combined with each other, but they must be based on the ability of ordinary technicians in this field to implement them. When the combination of technical solutions is contradictory or cannot be implemented, it should be deemed that such combination of technical solutions does not exist and is not within the scope of protection required by this application.

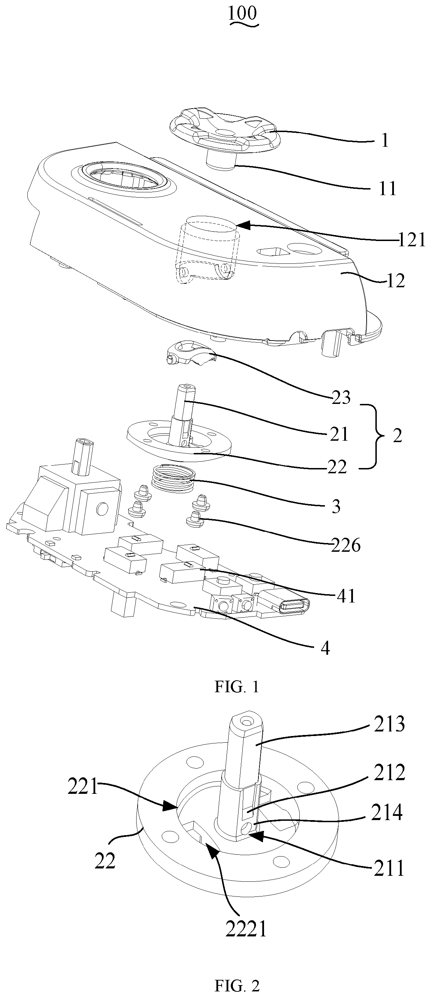

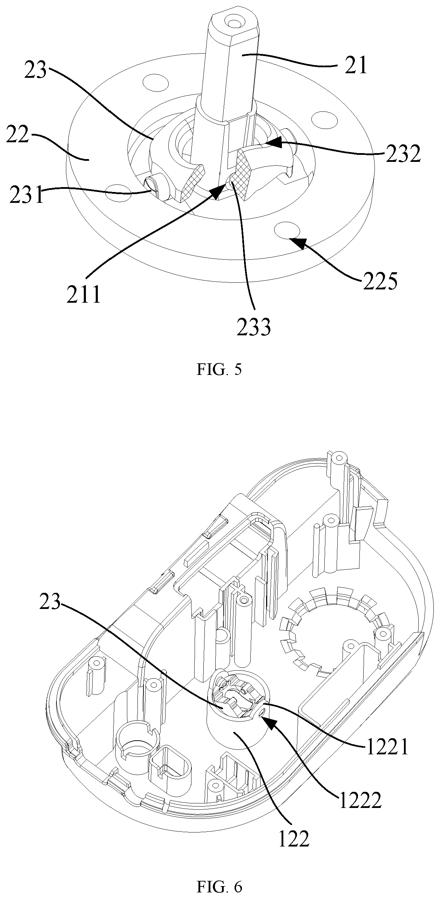

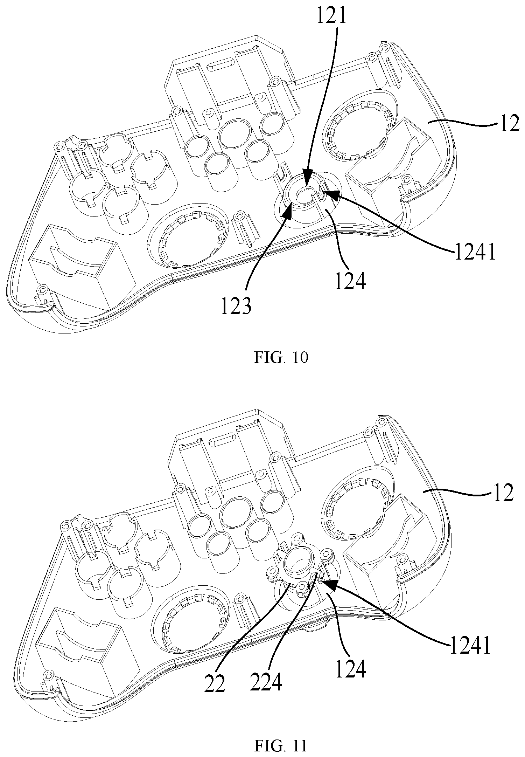

With reference to FIG. 1 to FIG. 12, the present application provides a cross key module 100, which includes a key cap 1, a face shell 12, a circuit board 4, and a joystick structure 2. The face shell 12 is provided with a through hole 121. The key cap 1 and the circuit board 4 are respectively located on two sides of the face shell 12, and the circuit board 4 is provided with contact. The joystick structure 2 is rotatably connected to the face shell 12 and is provided with a connection rod 21 and a trigger portion 22 connected to the connection rod 21. One end of the connection rod 21 passes through the through hole 121 and is connected to the key cap 1, and the trigger portion 22 is configured to trigger the contacts. When the key cap 1 is pressed, the key cap 1 drives the trigger portion 22 to rotate relative to the face shell 12 through the connection rod 21, so that the trigger portion 22 triggers the contacts.

It can be understood that the cross key module 100 is usually applied to a game controller. The face shell 12 serves as a supporting member, providing an installation position for the joystick structure 2 and the key cap 1. The key cap 1 is provided on the outer side of the face shell 12 for user operation, the circuit board 4 is provided on the inner side of the face shell 12, and the joystick structure 2 is located between the face shell 12 and the circuit board 4. The joystick structure 2 is connected to the key cap 1 through the connection rod 21 and triggers the contacts on the circuit board 4 through the trigger portion 22. During use, the relative positions of the circuit board 4 and the face shell 12 are fixed. A user drives the connection rod 21 and the trigger portion 22 to rotate relative to the face shell 12 by pressing the key cap 1, so that the joystick structure 2 triggers the contacts on the circuit board 4, enabling the circuit board 4 to generate corresponding electrical signals to control the movement of a game character. In this application, the joystick structure 2 is rotatably connected to the face shell 12, which can enhance the triggering flexibility of the cross key module 100 and effectively improve the user's handling experience.

In practical implementation, one side of the key cap 1 away from the face shell 12 is provided with four movement directions: up, down, left, and right. The circuit board 4 is also provided with four contacts corresponding to these movement directions. The connection rod 21 is connected to the center of the key cap 1 and also to the center of the trigger portion 22. When the user does not press any movement direction, the key cap 1, the connection rod 21, and the trigger portion 22 are in a central position, and the contacts on the circuit board 4 are not triggered. When the user presses a certain movement direction, the key cap 1 deflects in that direction, thereby driving the connection rod 21 and the trigger portion 22 to rotate relative to the face shell 12. As a result, the trigger portion 22 also deflects in that direction and triggers the corresponding contacts on the circuit board 4 to control the game character to move in the corresponding direction. When the user presses two adjacent movement directions simultaneously, such as up-left, up-right, down-left, or down-right, the key cap 1 will deflect in the direction between the two adjacent movement directions, driving the connection rod 21 and the trigger portion 22 to rotate relative to the face shell 12. Thus, the trigger portion 22 also deflects in that direction, simultaneously triggering the contacts of the two adjacent directions and controlling the game character to move in a 45-degree angle direction between the two adjacent movement directions.

In an embodiment, the joystick structure 2 can be rotatably connected to the face shell 12 through the connection rod 21, or through the trigger portion 22, or through other components of the joystick structure 2, or through the cooperation of multiple components. The joystick structure 2 can be rotatably connected to the face shell 12 through a hinge, a spherical joint, a shaft-hole fit, etc., which are not specifically limited here.

It can be understood that the game controller forms a cavity by enclosing the face shell 12 and another shell. Generally, the face shell 12 is the upper shell, and the other shell is the lower shell. The upper and lower shells are relatively connected to enclose the cavity. The circuit board 4 is provided in the cavity to isolate the circuit board 4 from the external environment and prevent it from being interfered with and damaged.

As shown in FIG. 1 to FIG. 7, the joystick structure 2 includes a joystick body and a rotation block 23. The rotation block 23 is rotatably connected to the face shell 12. The joystick body is provided with the connection rod 21 and the trigger portion 22, and the connection rod 21 is rotatably connected to the rotation block 23. The rotation axis of the rotation block 23 relative to the face shell 12 is arranged along a first direction, the rotation axis of the connection rod 21 relative to the rotation block 23 is arranged along a second direction, and the first direction and the second direction are perpendicular to each other.

In an embodiment, since the rotation block 23 has a degree of freedom to rotate around the first direction relative to the face shell 12, and the connection rod 21 has a degree of freedom to rotate around the second direction relative to the rotation block 23, that is, the connection rod 21 has degrees of freedom to rotate around both the first direction and the second direction simultaneously, and these degrees of freedom can be superimposed. Therefore, the connection rod 21 and the trigger portion 22 have high rotation flexibility, and users can operate the keys more conveniently.

It can be understood that when the key cap 1 is not pressed, the key cap 1, the joystick body, and the rotation block 23 are in a central position. The extending direction of the connection rod 21 is defined as a third direction, where the first direction, the second direction, and the third direction are perpendicular to each other pairwise. When a movement direction on the key cap 1 is pressed, since the connection rod 21 and the trigger portion 22 have degrees of freedom to rotate around the first direction and the second direction relative to the face shell 12, the connection rod 21 and the trigger portion 22 will incline towards the movement direction relative to the third direction, so that the trigger portion 22 approaches and triggers the contacts of the circuit board 4 in that movement direction.

Taking the up, down, left, and right directions on the key cap 1 as an example, the up and down directions can be set as the first direction, and the left and right directions can be set as the second direction. When the up or down direction of the key cap 1 is pressed, the connection rod 21 rotates around the second direction relative to the rotation block 23, causing the key cap 1 to drive the connection rod 21 and the trigger portion 22 to deflect upward or downward. As a result, the trigger portion 22 approaches and triggers the corresponding contacts in the up or down direction. When the left or right direction of the key cap 1 is pressed, the rotation block 23 rotates around the first direction relative to the face shell 12, causing the key cap 1 to drive the connection rod 21 and the trigger portion 22 to deflect leftward or rightward. Thus, the trigger portion 22 approaches and triggers the corresponding contacts in the left or right direction. When two adjacent directions of the key cap 1 are pressed, taking the up and right directions as an example, the rotation block 23 rotates around the first direction relative to the face shell 12, and at the same time, the connection rod 21 rotates around the second direction. This causes the key cap 1 to drive the connection rod 21 and the trigger portion 22 to deflect in the direction between the up and right directions, so that the trigger portion 22 simultaneously approaches and triggers the contacts corresponding to the up and right directions.

In practical implementation, the projection of the rotation axis of the rotation block 23 relative to the face shell 12 and the rotation axis of the connection rod 21 relative to the rotation block 23 in the third direction has an intersection point. When the joystick structure 2 is in the central position or inclined relative to the third direction, the extension line of the axis of the connection rod 21 always passes through this intersection point. This can effectively improve the stability of the joystick structure 2 in the central position, ensure the timeliness and accuracy of the key cap 1 driving the joystick structure 2 to trigger the contacts of the circuit board 4, and improve the user experience of the cross key module 100.

In an embodiment, the rotation block 23 and the face shell 12 are rotatably connected through a shaft-hole fit or a hinge and other structures, and the rotation block 23 and the connection rod 21 are rotatably connected through a shaft-hole fit or a hinge and other structures. The connection rod 21 and the trigger portion 22 can be integrally formed. The face shell 12 and the joystick structure 2 can be made of plastic.

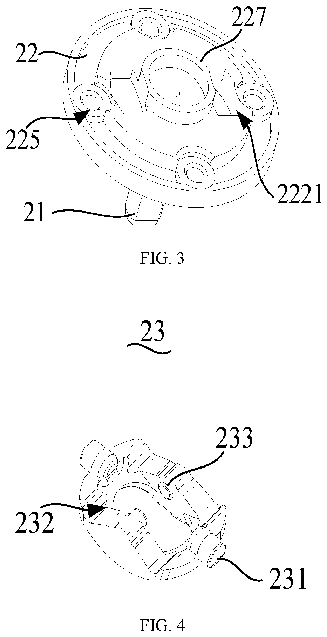

As shown in FIG. 4 to FIG. 7, the face shell 12 is provided with an installation column 122. The through hole 121 passes through the installation column 122. The installation column 122 is further provided with a first axis hole 1222 communicating with the through hole 121. The rotation block 23 is provided with a first rotation axis 231. The first rotation axis 231 extends along the first direction, and the first rotation axis 231 is rotatably inserted into the first axis hole 1222.

In an embodiment, the installation column 122 is provided on one side of the face shell 12 facing the circuit board 4. The connection rod 21 is provided in the through hole 121 of the installation column 122 in a penetrating manner to be connected to the key cap 1 on the other side of the face shell 12. The rotation block 23 is rotatably connected to the shell through the shaft-hole fit of the first rotation axis 231 and the first axis hole 1222. The arrangement of the installation column 122 increases the structural volume for the rotating connection with the rotation block 23 and improves the strength and stability of the rotating connection between the face shell 12 and the rotation block 23.

In practical implementation, the cross-sectional area of the through hole 121 is larger than that of the connection rod 21, so that the connection rod 21 has enough space to deflect. There can be two first rotation axis 231, which are respectively provided on two sides of the rotation block 23. Correspondingly, there are also two first axis holes 1222 on the installation column 122, and the two first rotation axis 231 are respectively and rotatably extended into the two first axis holes 1222 to ensure the stability of the rotating fit between the rotation block 23 and the shell. In an embodiment, a convex portion 1221 is provided on the periphery of one side of the installation column 122 facing the circuit board 4, and the first axis hole 1222 is provided on the convex portion 1221. This can reduce the positioning difficulty during the assembly of the first mounting shaft and the first axis hole 1222 and improve the assembly efficiency. At the same time, the convex arrangement of the convex portion 1221 enables it to have good elasticity, facilitating the first rotation axis 231 to be clamped into the first axis hole 1222.

In an embodiment, the first rotation axis 231 can also be provided on the installation column 122, and the first axis hole 1222 is correspondingly provided on the rotation block 23 for the first rotation axis 231.

As shown in FIG. 2 to FIG. 7, the rotation block 23 is further provided with an installation chamber 232. A chamber wall of the installation chamber 232 is provided with a second rotation axis 233. The second rotation axis 233 extends along the second direction. The connection rod 21 is provided with a second axis hole 211. The connection rod 21 is inserted into the installation chamber 232, and the second rotation axis 233 is rotatably inserted into the second axis hole 211.

In an embodiment, the installation chamber 232 penetrates through the rotation block 23. The connection rod 21 is provided in the installation chamber 232 in a penetrating manner and is rotatably connected to the rotation block 23 through the hole-shaft fit of the second axis hole 211 and the second rotation axis 233.

It can be understood that the arrangement of the installation chamber 232 enables the connection rod 21 to be centrally arranged, and the extension line of the axis of the connection rod 21 can pass through the intersection point of the projections of the first rotation axis 231 and the second rotation axis 233 in the third direction. This effectively improves the stability and reliability of the joystick structure 2 when it is stationary and rotating in the center and avoids the joystick structure 2 from accidentally touching the contacts on the circuit board 4.

In practical implementation, the cross-sectional area of the installation chamber 232 is larger than that of the connection rod 21, so that the connection rod 21 provided in the installation chamber 232 in a penetrating manner can rotate relative to the rotation block 23. There are two second rotation axis 233, which are respectively provided on two opposite side walls of the installation chamber 232. Correspondingly, there are also two second axis holes 211 on the connection rod 21, and the two second rotation axis 233 are respectively and rotatably extended into the two second axis holes 211 to ensure the stability of the rotating fit between the connection rod 21 and the rotation block 23. In an embodiment, the second rotation axis 233 can also be provided on the connection rod 21, and the second axis hole 211 is correspondingly provided on the wall of the installation chamber 232 for the second rotation axis 233.

As shown in FIG. 2 and FIG. 4, the connection rod 21 is further provided with a guide bevel 212, and the guide bevel 212 is configured to guide the second rotation axis 233 to enter the second axis hole 211.

In an embodiment, when assembling the rotation block 23 and the joystick body, the rotation block 23 needs to be sleeved from one end of the connection rod 21, and then the rotation block 23 is moved along the connection rod 21 until the second rotation axis 233 is clamped into the second axis hole 211.

In practical implementation, there are two corresponding second rotation axis 233 and second axis holes 211. The connection rod 21 includes a first section 213 and a second section 214 that are connected. When assembling the rotation block 23, the rotation block 23 is sleeved from one end of the first section 213 away from the second section 214. The width of the first section 213 in the second direction is less than or equal to the distance between the end faces of the two second rotation axis 233. The width of the second section 214 in the second direction is greater than the distance between the end faces of the two second rotation axis 233, and the second axis hole 211 is provided on the second section 214. This can reduce the difficulty of sleeving the rotation block 23 from the first section 213 and prevent the second section 214 from separating from the second axis hole 211 after entering it. The guide bevel 212 is arranged at the joint of the first section 213 and the second section 214. When the rotation block 23 is moved from the first section 213 to the second section 214, the second rotation axis 233 can move along the guide bevel 212, reducing the movement difficulty of the rotation block 23 and improving the assembly convenience of the rotation block 23.

In an embodiment, the second axis hole 211 is provided at one end of the connection rod 21 close to the trigger portion 22. The trigger portion 22 is provided with an avoidance groove 221 corresponding to the rotation block 23, and the rotation block 23 is located in the avoidance groove 221.

In an embodiment, one end of the connection rod 21 is connected to the key cap 1, the other end of the connection rod 21 is connected to the trigger portion 22. The rotation block 23 is sleeved at one end of the connection rod 21 close to the trigger portion 22 and is located in the avoidance groove 221 provided on the rotation block 23. This makes the joystick structure 2 more compact and effectively saves assembly space.

In practical implementation, the first rotation axis 231 of the rotation block 23 is provided in the installation hole 111 provided on the installation column 122 in a penetrating manner, and part of the installation column 122 also extends into the mounting groove, further improving the assembly compactness of the joystick structure 2 and the face shell 12. When the first axis hole 1222 is provided on the convex portion 1221 of the installation column 122, the bottom of the mounting groove is further provided with an avoidance hole 2221 for the convex portion 1221 to extend into.

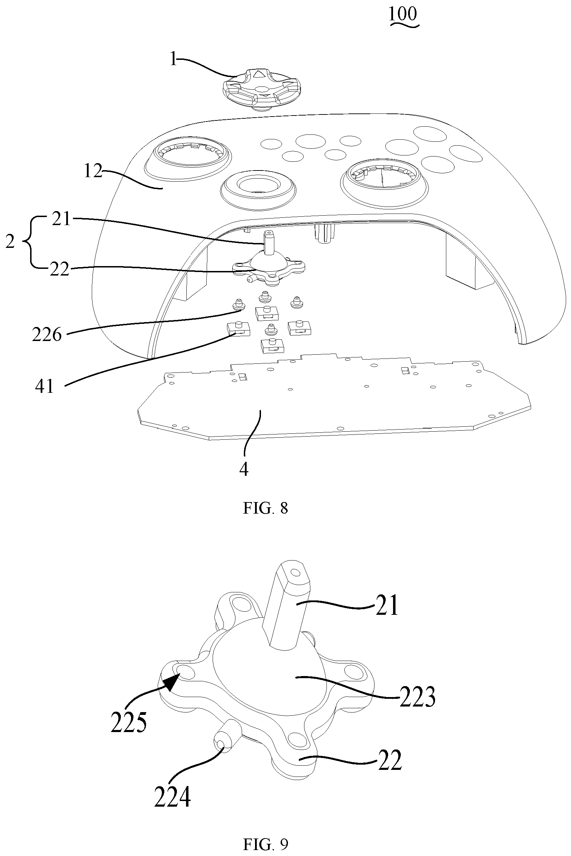

As shown in FIG. 8 to FIG. 12, a spherical protrusion 223 is formed on one side of the trigger portion 22 away from the circuit board 4. The spherical protrusion 223 is connected to the connection rod 21. The face shell 12 is provided with a spherical groove 123. The through hole 121 passes through the bottom of the spherical groove 123, and the spherical protrusion 223 is limited within the spherical groove 123.

In an embodiment, the joystick structure 2 is directly and rotatably connected to the face shell 12 through the trigger portion 22. The trigger portion 22 is provided with the spherical protrusion 223, and the face shell 12 is provided with the spherical groove 123 corresponding to the spherical protrusion 223. The spherical protrusion 223 and the spherical groove 123 can be attached to form a structure similar to a spherical joint, and the spherical protrusion 223 can slide in the spherical groove 123, enabling the trigger portion 22 to rotate relative to the face shell 12. The connection rod 21 is connected to the center of the spherical protrusion 223, and the through hole 121 also penetrates through the center of the spherical groove 123. When the spherical protrusion 223 is attached to the spherical groove 123, the connection rod 21 is also provided in the through hole 121 in a penetrating manner, and one end of the connection rod 21 away from the spherical protrusion 223 is connected to the key cap 1.

It can be understood that when the key cap 1 is not pressed, the key cap 1, the connection rod 21, and the trigger portion 22 are in a central position, and the contacts on the circuit board 4 are not triggered. At this time, the extending direction of the connection rod 21 is defined as a third direction, and the cooperation between the spherical protrusion 223 and the spherical groove 123 enables the connection rod 21 to deflect in any direction relative to the third direction. Therefore, when any movement direction on the key cap 1 is pressed, the key cap 1 can drive the connection rod 21 and the trigger portion 22 to rotate relative to the face shell 12, causing the connection rod 21 and the trigger portion 22 to deflect in that direction, and the trigger portion 22 triggers the contacts on the circuit board 4 corresponding to that direction.

As shown in FIG. 9 to FIG. 11, the face shell 12 further includes limit members 124 provided on two sides of the spherical groove 123. The limit members 124 are provided with limit grooves 1241. The trigger portion 22 is provided with limit columns 224, and the limit columns 224 are movably limited within the limit grooves 1241.

In an embodiment, in order to prevent the key cap 1 from driving the connection rod 21 and the trigger portion 22 to move around the third direction, the limit members 124 and the trigger portion 22 are limited through the limit columns 224 and the limit grooves 1241. When the spherical protrusion 223 is assembled in the spherical groove 123, the limit columns 224 extend into the limit grooves 1241 to prevent the joystick structure 2 from rotating around the third direction driven by the key cap 1 during use, ensuring that the trigger portion 22 can trigger the contacts on the circuit board 4 in the preset direction.

It can be understood that the extending direction of the limit column 224 is perpendicular to the third direction, and the limit column 224 is not tightly attached to the groove wall of the limit groove 1241 for limitation, so as not to affect the rotation of the spherical protrusion 223 in the spherical groove 123.

In practical implementation, two groups of limit members 124 and limit columns 224 can be correspondingly arranged. The two limit members 124 are oppositely provided on two sides of the spherical groove 123, and the two limit columns 224 are respectively limited in the two limit grooves 1241.

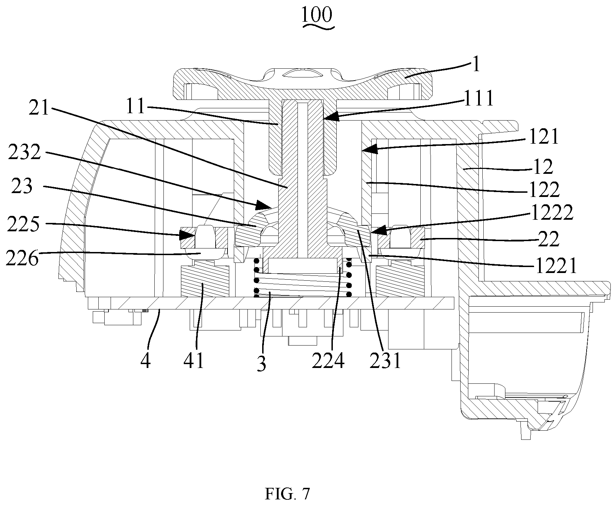

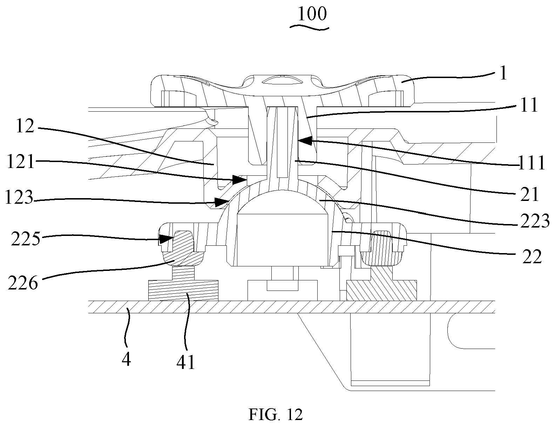

As shown in FIG. 7 and FIG. 12, the key cap 1 is provided with an installation rod 11, and the installation rod 11 is provided with an installation hole 111 which is pluggable and matched with the connection rod 21, so that the key cap 1 and the rocker structure 2 can be detachably connected.

In an embodiment, the key cap 1 is detachably connected through the plug-in fit of the connection rod 21 and the installation hole 111, enabling the key cap 1 to be detached from the joystick structure 2. Therefore, users can replace the key cap 1 according to their preference for the feel, effectively improving the usability of the cross key module 100.

It can be understood that the hole wall of the installation hole 111 is in limit fit with the peripheral surface of the connection rod 21 extending into the installation hole 111. The cross-sectional shape of the installation hole 111 and the cross-sectional shape of the connection rod 21 extending into the installation hole 111 are both non-circular, so as to avoid relative rotation between the key cap 1 and the connection rod 21, which would cause the direction keys of the key cap 1 to not correspond to the contacts on the circuit board 4.

In an embodiment, the connection rod 21 can be limited in the installation hole 111 through a snap structure, which is not specifically limited here.

As shown in FIG. 1, FIG. 7, FIG. 8, and FIG. 12, the circuit board 4 is provided with a plurality of tactile switches 41. Each tactile switch 41 is set as one of the contacts. The trigger portion 22 is provided with a plurality of silicone parts 226. The silicone parts 226 provided in one-to-one correspondence with the contacts, and the silicone parts 226 are used to press and trigger the tactile switches 41.

In an embodiment, the tactile switches 41 are used as contacts. When the tactile switches 41 are pressed, they are triggered. The trigger portion 22 is provided with a silicone part 226 corresponding to each tactile switch 41. When the key cap 1 and the joystick structure 2 are in a central state without triggering the tactile switches 41, the silicone parts 226 are abutted against the corresponding tactile switches 41 but do not press and trigger them. When the key cap 1 drives the connection rod 21 and the trigger portion 22 to deflect towards a certain tactile switch 41, the trigger portion 22 will press the silicone part 226, and the silicone part 226 will be deformed to press the tactile switch 41, triggering it. When the user removes the external force on the key cap 1, the silicone part 226 will rebound and drive the joystick structure 2 and the key cap 1 to return to the central state.

In practical implementation, taking the key cap 1 having four movement directions: up, down, left, and right as an example, the circuit board 4 is also provided with four tactile switches 41. The four tactile switches 41 correspond to the four movement directions one by one. The trigger portion 22 is also provided with four silicone parts 226, and the four silicone parts 226 correspond to the four tactile switches 41 one by one.

It can be understood that the silicone part 226 has a certain supporting effect on the joystick structure 2. When the mass of the key cap 1 and the joystick structure 2 is small, the key cap 1 and the joystick structure 2 cannot drive the silicone part 226 to deform and trigger the tactile switch 41 by their own gravity. Through the supporting effect of the silicone part 226 on the joystick structure 2, the spherical protrusion 223 can be kept in the spherical groove 123.

In an embodiment, the trigger portion 22 can be provided in a disc shape or a cross shape, which is not specifically limited here. The trigger portion 22 is provided with a limit hole 225 corresponding to each silicone part 226, and the silicone part 226 is limited in the limit hole 225 through an interference fit.

In the embodiment of the present application, the circuit board 4 is provided with a plurality of conductive silicone buttons, and each conductive silicone button is set as one of the contacts. In an embodiment, the contacts can also be other conductive rebound buttons, which are not specifically limited here.

As shown in FIG. 1 and FIG. 7, the cross key module 100 further includes a reset elastic part 3. One end of the reset elastic part 3 is connected to the trigger portion 22, the other end of the reset elastic part 3 is connected to the circuit board 4. The reset elastic part 3 is coaxial with the connection rod 21, and the reset elastic part 3 is configured to drive the joystick structure 2 to reset.

In an embodiment, a reset elastic part 3 is further arranged between the trigger portion 22 and the circuit board 4. When a user presses the key cap 1 to drive the connection rod 21 and the trigger portion 22 to rotate relative to the face shell 12, the reset elastic part 3 will be deformed. When the user stops pressing, the reset elastic part 3 will rebound and drive the joystick structure 2 to reset. The arrangement of the reset elastic part 3 can further ensure the stability of the reset function of the cross key module 100.

In practical implementation, the reset elastic part 3 can be a spring, a rubber pad, etc. The reset elastic part 3 is connected to the center of the trigger portion 22. When the joystick structure 2 is in the central position, the reset elastic part 3 is coaxial with the connection rod 21. When the key cap 1 is stressed to drive the connection rod 21 and the trigger portion 22 to deflect relative to the face shell 12, the reset elastic part 3 is also bent and deformed in the same direction. After the external force on the key cap 1 is removed, the reset elastic part 3 rebounds and drives the key cap 1 and the joystick structure 2 to reset.

In an embodiment, the reset elastic part 3 is a spring. A positioning column 227 or a positioning groove can be provided on one side of the trigger portion 22 facing the circuit board 4, and the spring can be sleeved on the positioning column 227 or limited in the positioning groove to realize the connection with the trigger portion 22.

The present application further provides a game controller, which includes the cross key module 100. The specific structure of the cross key module 100 refers to the above embodiments. Since the game controller adopts all the technical solutions of the above embodiments, it at least has all the beneficial effects brought by the technical solutions of the above embodiments, and details are not repeated here.

The above description is only an exemplary embodiment of the present application and does not limit the patent scope of the present application. All equivalent structural changes made by using the contents of the present application specification and drawings under the technical concept of the present application, or directly/indirectly applied in other related technical fields are included in the patent protection scope of the present application.

## Claims

1. A cross key module (100), **characterized by** comprising:
a key cap (1);
a face shell (12) provided with a through hole (121);
a circuit board (4) provided with contacts; and
a joystick structure (2) rotatably connected to the face shell (12),
wherein the key cap (1) and the circuit board (4) are respectively located on two sides of the face shell (12);
the joystick structure (2) is provided with a connection rod (21) and a trigger portion (22) connected to the connection rod (21), one end of the connection rod (21) passes through the through hole (121) and is connected to the key cap (1), and the trigger portion (22) is configured to trigger the contacts; and
when the key cap (1) is pressed, the key cap (1) drives the trigger portion (22) to rotate relative to the face shell (12) through the connection rod (21), and the trigger portion (22) triggers the contacts.

2. The cross key module (100) according to claim 1, wherein:
the joystick structure (2) comprises a joystick body and a rotation block (23), the rotation block (23) is rotatably connected to the face shell (12), the joystick body is provided with the connection rod (21) and the trigger portion (22), and the connection rod (21) is rotatably connected to the rotation block (23); and
a rotation axis of the rotation block (23) relative to the face shell (12) is arranged along a first direction, a rotation axis of the connection rod (21) relative to the rotation block (23) is arranged along a second direction, and the first direction and the second direction are perpendicular to each other.

3. The cross key module (100) according to claim 2, wherein the face shell (12) is provided with an installation column (122), the through hole (121) passes through the installation column (122), the installation column (122) is further provided with a first axis hole (1222) communicating with the through hole (121), the rotation block (23) is provided with a first rotation axis (231), the first rotation axis (231) extends along the first direction, and the first rotation axis (231) is rotatably inserted into the first axis hole (1222).

4. The cross key module (100) according to claim 2, wherein the rotation block (23) is further provided with an installation chamber (232), a chamber wall of the installation chamber (232) is provided with a second rotation axis, the second rotation axis extends along the second direction, the connection rod (21) is provided with a second axis hole (211), the connection rod (21) is inserted into the installation chamber (232), and the second rotation axis is rotatably inserted into the second axis hole (211).

5. The cross key module (100) according to claim 4, wherein:
the connection rod (21) is further provided with a guide bevel (212), and the guide bevel (212) is configured to guide the second rotation axis to enter the second axis hole (211); and/or
the second axis hole (211) is provided at one end of the connection rod (21) close to the trigger portion (22), the trigger portion (22) is provided with an avoidance groove (221) corresponding to the rotation block (23), and the rotation block (23) is located in the avoidance groove (221).

6. The cross key module (100) according to claim 1, wherein a spherical protrusion (223) is formed on one side of the trigger portion (22) away from the circuit board (4), the spherical protrusion (223) is connected to the connection rod (21), the face shell (12) is provided with a spherical groove (123), the through hole (121) passes through a bottom of the spherical groove (123), and the spherical protrusion (223) is limited within the spherical groove (123).

7. The cross key module (100) according to claim 6, wherein the face shell (12) is further provided with a limit member (124) close to the spherical groove (123), the limit member (124) is provided with a limit groove (1241), the trigger portion (22) is provided with a limit column (224), and the limit column (224) is movably limited within the limit groove (1241).

8. The cross key module (100) according to any one of claims 1 to 7, wherein the key cap (1) is provided with an installation rod (11), the installation rod (11) is provided with an installation hole (111), the installation hole (111) is pluggable and matched with the connection rod (21), so that the key cap (1) is detachably connected to the joystick structure (2).

9. The cross key module (100) according to any one of claims 1 to 7, wherein:
the circuit board (4) is provided with a plurality of tactile switches (41), each tactile switch (41) is configured as one of the contacts, the trigger portion (22) is provided with a plurality of silicone parts (226), the silicone parts (226) correspond one-to-one with the contacts, and the silicone parts (226) are configured to press and trigger the tactile switches (41); or
the circuit board (4) is provided with a plurality of conductive silicone buttons, and each conductive silicone button is configured as one of the contacts.

10. The cross key module (100) according to any one of claims 1 to 7, further comprising a reset elastic part (3), wherein one end of the reset elastic part (3) is connected to the trigger portion (22), another end of the reset elastic part (3) is connected to the circuit board (4), the reset elastic part (3) is coaxial with the connection rod (21), and the reset elastic part (3) is configured to drive the joystick structure (2) to reset.

11. A game controller, **characterized by** comprising the cross key module (100) according to any one of claims 1 to 10.
